# EUROPEAN PATENT APPLICATION

(11) **EP 4 808 171 A1**
(43) Date of publication of application: **16.09.2026**
(21) Application number: 24899661.3
(22) Date of filing: 25.11.2024
(51) Int. Cl.: H04W 4/38

(54) **METEOROLOGICAL MEASUREMENT METHOD AND APPARATUS, AND SYSTEM**

(30) Priority: 04.12.2023 CN 202311654710
(71) Applicant: Huawei Technologies Co., Ltd., Shenzhen, Guangdong 518129 (CN)
(72) Inventor: YU, Yingjie, Shenzhen, Guangdong 518129 (CN)
(74) Representative: Huawei European IPR
(86) International application number: PCT/CN2024/134210
(87) International publication number: WO 2025/119020

(57) **Abstract**

This specification discloses a meteorological measurement method, an apparatus, and a system, and relates to the field of communication technologies, to resolve problems, such as unbalanced distribution of supply, a long update delay, and inability to accurately determine an amount of surface precipitation, with a meteorological service that is provided by using a meteorological detection device such as a weather radar, a rain gauge, or a meteorological satellite. The method includes: A receive end receives a reference signal transmitted through a radio channel, measures the reference signal to obtain meteorological information, and then reports the meteorological information to a core network device; and accordingly, the core network device receives the meteorological information reported by the receive end, determines a characteristic parameter of a meteorological phenomenon based on the meteorological information, and further provides a meteorological service corresponding to the characteristic parameter of the meteorological phenomenon. The meteorological information represents a meteorological characteristic of the radio channel in a transmission process, and/or a channel status of the radio channel in the to-be-measured meteorological phenomenon. Solutions of this application may be widely applied to fields such as the field of communication technologies, artificial intelligence, the Internet of vehicles, and smart home networking.

## Description

### CROSS-REFERENCE TO RELATED APPLICATIONS

This application claims priority to Chinese Patent Application No. 202311654710.1, filed with the China National Intellectual Property Administration on December 4, 2023 and entitled "METEOROLOGICAL MEASUREMENT METHOD, APPARATUS, AND SYSTEM", which is incorporated herein by reference in its entirety.

### TECHNICAL FIELD

This application relates to the communication field, and in particular, to a meteorological measurement method, an apparatus, and a system.

### BACKGROUND

Public meteorological services provide daily meteorological services for the public, enabling the public to avoid meteorological risks and reduce losses caused by meteorological disaster. For example, people can avoid traveling in adverse weather based on meteorological forecast. However, the public meteorological services cannot satisfy requirements of different industries for meteorological services. For example, the public meteorological services can provide only meteorological forecast in a wide range and cannot satisfy requirements of the urban transportation industry for meteorological services, such as a short precipitation update delay and specific amounts of precipitation corresponding to different regions.

A meteorological detection device such as a weather radar, a rain gauge, or a meteorological satellite can obtain detection information of a rainfall meteorological phenomenon, and then determine an amount of precipitation and perform meteorological forecast based on the obtained detection information. However, the weather radar is mainly used to detect cloud mass in the air and is applicable to measuring an amount of precipitation in a high-altitude region, and cannot accurately determine an amount of surface precipitation. The rain gauge has poor spatial representation and is vulnerable to interference from external factors (for example, wind and obstacles), and consequently cannot accurately determine the amount of surface precipitation. The meteorological satellite has a problem of a long meteorological service delay. Furthermore, distribution of the meteorological detection device is unbalanced, causing problems with a provided meteorological service, such as unbalanced distribution of supply and a long update delay in some regions.

### SUMMARY

Embodiments of this application provide a meteorological measurement method, an apparatus, and a system, to resolve problems, such as unbalanced distribution of supply, a long update delay, and inability to accurately determine an amount of surface precipitation, with a meteorological service that is provided by using a meteorological detection device such as a weather radar, a rain gauge, or a meteorological satellite.

To achieve the foregoing objective, this application uses the following technical solutions.

According to a first aspect, this application provides a meteorological measurement method. The method may be performed by a receive end and a function module or a chip of the receive end. The method includes: The receive end receives a reference signal transmitted through a radio channel, then measures the reference signal to obtain meteorological information, and further reports the meteorological information to a core network device. The meteorological information represents a meteorological characteristic of the radio channel in a transmission process, and/or a channel status of the radio channel in a to-be-measured meteorological phenomenon.

Based on the method in the first aspect, the receive end further obtains the meteorological information by measuring the received reference signal, and then reports the meteorological information to the core network device. The meteorological information represents the meteorological characteristic of the radio channel in the transmission process, and/or represents the channel status of the radio channel in the to-be-measured meteorological phenomenon. In this way, the core network device may determine the characteristic parameter of the meteorological phenomenon based on the meteorological information, to provide a meteorological service in which the distribution of supply is balanced, an update delay is short, and the characteristic parameter of the meteorological phenomenon is accurately determined.

In a possible design, the receive end receives a sensing request message used to request to measure and report the meteorological information, and then the receive end receives, based on the sensing request message, the reference signal transmitted through the radio channel. Based on this possible design, the receive end receives the reference signal based on a request in the sensing request message, to achieve an objective of reporting the meteorological information.

In a possible design, the sensing request message includes at least one of the following: a measurement type, a measurement quantity, a measurement period, or a measurement duration. The measurement type indicates a type of the to-be-measured meteorological phenomenon, and the measurement quantity indicates information that needs to be measured and that corresponds to the to-be-measured meteorological phenomenon. Based on this possible design, specific information included in the sensing request message is provided, so that the receive end subsequently measures and reports the meteorological information.

In a possible design, the meteorological information includes at least one of the following: distance decoupling path loss information, meteorologically-induced path loss information, a link length, polarization information, direction information, or frequency information. Based on this possible design, detailed information included in the meteorological information is provided so that, after receiving the meteorological information subsequently, the core network device accurately determines a meteorological service with the characteristic parameter of the meteorological phenomenon based on the meteorological information.

In a possible design, the meteorologically-induced path loss information is determined by the receive end based on at least one of the following: link attenuation, free-space path loss, transmission path loss caused by water film, or noise. Based on this possible design, a manner of determining the meteorologically-induced path loss information is provided, to achieve an objective of determining the meteorologically-induced path loss information.

According to a second aspect, this application provides a meteorological measurement method. The method may be performed by a core network device and a functional module or a chip in the core network device. The method includes: The core network device receives meteorological information reported by a receive end, and determines a characteristic parameter of a meteorological phenomenon based on the meteorological information. The meteorological information represents a meteorological characteristic of a radio channel in a transmission process, and/or a channel status of the radio channel in a to-be-measured meteorological phenomenon.

Based on the method in the second aspect, the core network device may determine the characteristic parameter of the meteorological phenomenon based on the meteorological information, to provide a meteorological service in which the distribution of supply is balanced, an update delay is short, and the characteristic parameter of the meteorological phenomenon is accurately determined.

In a possible design, the core network device sends a sensing request message used to request the receive end to measure and report the meteorological information. Based on this possible design, the core network device may achieve an objective of obtaining the meteorological information based on the sent sensing request message.

In a possible design, the sensing request message sent by the core network device includes at least one of the following: a measurement type, a measurement quantity, a measurement period, or a measurement duration. The measurement type indicates a type of the to-be-measured meteorological phenomenon, and the measurement quantity indicates information that needs to be measured and that corresponds to the to-be-measured meteorological phenomenon. Based on this possible design, specific information included in the sensing request message sent by the core network device is provided, so that the receive end can measure and report, based on the sensing request message, the meteorological information requested in the sensing request message. Further, the core network device obtains the meteorological information, thereby achieving an objective of obtaining the meteorological information.

In a possible design, the meteorological information received by the core network device includes at least one of the following: distance decoupling path loss information, meteorologically-induced path loss information, a link length, polarization information, direction information, or frequency information. Based on this possible design, specific information included in the meteorological information of the core network device is provided, so that the core network device achieves an objective of determining the characteristic parameter of the meteorological phenomenon based on the received meteorological information.

In a possible design, the meteorologically-induced path loss information is determined by the receive end based on at least one of the following: link attenuation, free-space path loss, transmission path loss caused by water film, or noise. Based on this possible design, a manner of determining the meteorologically-induced path loss information in the meteorological information received by the core network device is provided, so that the core network device can obtain the meteorologically-induced path loss information.

In a possible design, a transmit end is a terminal device, and the receive end is an access network device; or a transmit end is an access network device, and the receive end is a terminal device. Based on this possible design, the transmit end and the receive end may correspond to different devices, and this solution is flexibly and diversely applied to different scenarios, thereby improving utilization of this solution.

According to a third aspect, this application provides a communication apparatus. The communication apparatus may be a receive end, or a chip or a system on a chip of the receive end; or may be a functional module that is of the receive end and that is configured to implement the method according to any one of the first aspect or the possible designs of the first aspect. The communication apparatus may implement functions performed by the receive end in the foregoing aspects or the possible designs, and the functions may be implemented by hardware executing corresponding software. The hardware or the software includes one or more modules corresponding to the functions. For example, the communication apparatus may include a transceiver unit and a processing unit.

The transceiver unit is configured to receive a reference signal transmitted through a radio channel.

The processing unit is configured to measure the reference signal to obtain meteorological information, where the meteorological information represents a meteorological characteristic of the radio channel in a transmission process, and/or a channel status of the radio channel in a to-be-measured meteorological phenomenon.

The transceiver unit is further configured to report the meteorological information to a core network device.

Specifically, for related descriptions of the meteorological information, refer to descriptions in any one of the first aspect or the possible designs of the first aspect. In addition, for an action performed by each unit of the communication apparatus, refer to descriptions in any one of the first aspect or the possible designs of the first aspect. Details are not described again.

According to a fourth aspect, this application provides a communication apparatus. The communication apparatus may be a receive end, or a chip or a system on a chip of the receive end. The communication apparatus may implement functions performed by the receive end in the foregoing aspects or the possible designs, and the functions may be implemented by hardware. In a possible design, the communication apparatus includes a processor and a communication interface. The processor and the communication interface are configured to support the communication apparatus in performing the meteorological measurement method according to any one of the first aspect or the possible designs of the first aspect. In another possible design, the communication apparatus may further include a memory. The memory is configured to store computer-executable instructions and data that are necessary for the communication apparatus. When the communication apparatus is running, the processor executes the computer-executable instructions stored in the memory, so that the communication apparatus performs the meteorological measurement method according to any one of the first aspect or the possible designs of the first aspect.

According to a fifth aspect, this application provides a communication apparatus. The communication apparatus may be a core network device, or a chip or a system on a chip in the core network device; or may be a functional module that is in the core network device and that is configured to implement the method according to any one of the second aspect or the possible designs of the second aspect. The communication apparatus may implement functions performed by the core network device in the foregoing aspects or the possible designs, and the functions may be implemented by hardware by executing corresponding software. The hardware or the software includes one or more modules corresponding to the functions. For example, the communication apparatus may include a transceiver unit and a processing unit.

The transceiver unit is configured to receive meteorological information reported by a receive end, where the meteorological information represents a meteorological characteristic of a radio channel in a transmission process, and/or a channel status of the radio channel in a to-be-measured meteorological phenomenon.

The processing unit is configured to determine a characteristic parameter of the meteorological phenomenon based on the meteorological information.

Specifically, for related descriptions of the meteorological information, refer to descriptions in any one of the second aspect or the possible designs of the second aspect. In addition, for an action performed by each unit of the communication apparatus, refer to descriptions in any one of the second aspect or the possible designs of the second aspect. Details are not described again.

According to a sixth aspect, this application provides a communication apparatus. The communication apparatus may be a core network device, or a chip or a system on a chip in the core network device. The communication apparatus may implement functions performed by the core network device in the foregoing aspects or the possible designs, and the functions may be implemented by hardware. In a possible design, the communication apparatus includes a processor and a communication interface. The processor and the communication interface are configured to support the communication apparatus in performing the meteorological measurement method according to any one of the second aspect or the possible designs of the second aspect. In another possible design, the communication apparatus may further include a memory. The memory is configured to store computer-executable instructions and data that are necessary for the communication apparatus. When the communication apparatus is running, the processor executes the computer-executable instructions stored in the memory, so that the communication apparatus performs the meteorological measurement method according to any one of the second aspect or the possible designs of the second aspect.

According to a seventh aspect, this application provides a communication system. The communication system includes the communication apparatus provided in the third aspect or the fourth aspect, or the communication system includes the communication apparatus provided in the fifth aspect or the sixth aspect.

According to an eighth aspect, this application provides a computer-readable storage medium. The computer-readable storage medium stores computer instructions. When the computer instructions are run on a computer, the computer is enabled to perform the meteorological measurement method according to any one of the first aspect or the possible designs of the first aspect, or the computer is enabled to perform the meteorological measurement method according to any one of the second aspect or the possible designs of the second aspect.

According to a ninth aspect, this application provides a computer program product. The computer program product includes computer instructions. When the computer instructions are run on a computer, the computer is enabled to perform the meteorological measurement method according to any one of the first aspect or the possible designs of the first aspect, or the computer is enabled to perform the meteorological measurement method according to any one of the second aspect or the possible designs of the second aspect.

For technical effects achieved by any one of the design manners of the third aspect and the fourth aspect, refer to the technical effects achieved by any one of the first aspect or the possible designs of the first aspect. Details are not described again. For technical effects achieved by any one of the design manners of the fifth aspect and the sixth aspect, refer to the technical effects achieved by any one of the second aspect or the possible designs of the second aspect. Details are not described again. For technical effects achieved by any one of the design manners of the seventh aspect to the ninth aspect, refer to the technical effects achieved by any one of the first aspect or the possible designs of the first aspect. Alternatively, for technical effects achieved by any one of the design manners of the seventh aspect to the ninth aspect, refer to the technical effects achieved by any one of the second aspect or the possible designs of the second aspect. Details are not described again.

### BRIEF DESCRIPTION OF DRAWINGS

FIG. 1a is a diagram of a communication system according to an embodiment of this application;
FIG. 1b is a diagram of a communication system according to an embodiment of this application;
FIG. 2 is a schematic flowchart of a meteorological measurement method according to an embodiment of this application;
FIG. 3 is a schematic flowchart of a meteorological measurement method according to an embodiment of this application;
FIG. 4 is a diagram of a structure of a communication apparatus according to an embodiment of this application;
FIG. 5 is a diagram of a structure of a communication apparatus according to an embodiment of this application; and
FIG. 6 is a diagram of a structure of a communication apparatus according to an embodiment of this application.

### DESCRIPTION OF EMBODIMENTS

Before embodiments of this application are described, related technical terms in embodiments of this application are explained and described. It should be noted that the following explanations and descriptions are intended to facilitate understanding of embodiments of this application, and should not be construed as any limitation on the protection scope claimed in embodiments of this application.

Meteorological detection and forecast may mean: obtaining detection information of a rainfall meteorological phenomenon mainly by using a meteorological detection device such as a weather radar, a rain gauge, or a meteorological satellite, then determining an amount of surface rainfall, reconstructing a rainfall field and the like based on the obtained detection information, and predicting meteorological phenomenon within a specific time period based on a determining result and a reconstruction result, so that a user can perform user activities with reference to the meteorological forecast. The amount of surface rainfall means a depth of a layer of water that lands at a point or in a unit area of the ground within a certain period of time. The rainfall field means dividing a detection region into a plurality of unit regions that do not overlap each other, where each unit region corresponds to a specific amount of surface rainfall, and this amount of surface rainfall indicates a depth of a layer of water in the unit region within a specific time.

The weather radar is a radar specially used for atmospheric detection. Echo of the weather radar is detected to continuously detect rainfall in a wide range and provide dynamic detection information of continuous precipitation in space. However, the weather radar supports detection of precipitation in a high-altitude region, and an amount of surface rainfall determined by using the weather radar is easily affected by factors such as vertical changes of precipitation and spatial-temporal changes of a raindrop spectrum, causing a problem of inaccuracy of the determined amount of surface rainfall.

The rain gauge is an instrument used to measure an amount of precipitation in a region within a period of time, and is applicable to determining an amount of surface precipitation in a small range. Therefore, spatial representation of the amount of surface precipitation determined by the rain gauge is poor, and a process of precipitation measurement using the rain gauge is vulnerable to interference from external factors (for example, wind and obstacles), causing instability and inaccuracy in the determined amount of surface precipitation. In addition, a problem of high maintenance costs exists for the rain gauge to determine an amount of surface rainfall in a remote region and/or a complex terrain region.

The meteorological satellite is a man-made earth satellite used for meteorological observation, and supports worldwide rainfall measurement. However, a communication distance between the meteorological satellite and a ground device is long, and a meteorological service delay is long. A low-earth-orbit meteorological satellite passes through a same region twice a day at a fixed time, and continuous observation of one region cannot be ensured. As a result, there is a problem that the amount of surface precipitation determined by using the geosynchronous meteorological satellite cannot support the construction of a real-time rainfall field.

It can be learned from the foregoing description that there are the following disadvantages in providing meteorological services, such as natural disaster warning, rainfall forecast, and rainfall assessment, by using the meteorological detection device such as the weather radar, the rain gauge, or the meteorological satellite.
(1) There is a problem of unbalanced distribution of supply of the meteorological services provided by using the meteorological detection device. For example, a densely populated and economically prosperous region is equipped with more meteorological detection devices, to provide instant and high-quality meteorological services for end users and/or devices; and a sparsely populated and economically underdeveloped region is equipped with fewer meteorological detection devices in consideration of equipment and maintenance costs of the meteorological detection devices, resulting in insufficient meteorological services provided for end users and/or devices.
(2) It is difficult for the meteorological detection device to complete meteorological detection in a complex terrain region, and accordingly impact of the complex terrain region on surrounding meteorological services cannot be estimated. For example, a transverse mountainous region A affects meteorological services of a district/county neighboring to the transverse mountainous region A and/or a city to which the transverse mountainous region A belongs, causing a problem of instability of the meteorological services.
(3) There is a problem of a long update delay for the meteorological services provided by using the meteorological detection device. For example, when a meteorological service provided by the weather radar needs to be updated, an update delay of the weather radar includes duration required for a radar detection signal to cover a detection region and data transmission duration, and the update delay is at a ten-minute level.

To resolve the problems, such as the unbalanced distribution of supply, the long update delay, and the inability to accurately determine the amount of surface precipitation, with the meteorological services provided by using the meteorological detection device such as the weather radar, the rain gauge, or the meteorological satellite, this application provides a meteorological measurement method. The method includes: A receive end receives a reference signal transmitted through a radio channel, then measures the reference signal to obtain meteorological information, and further reports the meteorological information to a core network device; and accordingly, the core network device receives the meteorological information reported by the receive end, and determines a characteristic parameter of a meteorological phenomenon based on the meteorological information. The meteorological information represents a meteorological characteristic of the radio channel in a transmission process, and/or a channel status of the radio channel in a to-be-measured meteorological phenomenon. In this way, meteorological measurement is performed based on a cellular network, and the meteorological characteristic parameter is determined, so that advantages of the cellular network such as wide distribution, low costs, and a low transmission delay can be fully utilized to accurately determine an amount of surface precipitation and provide a widely-distributed meteorological service with a short update delay. It should be understood that an amount of precipitation may be described alternatively as an amount of rainfall.

The following describes the meteorological measurement method provided in embodiments of this application with reference to the accompanying drawings in this specification.

The technical solutions in embodiments of this application may be applied to a cellular network (cellular network). The cellular network, also referred to as a mobile network, a mobile communication system, or a wireless communication system (or referred to as a communication system for short), is a mobile communication hardware architecture. A service area of a mobile terminal device in the cellular network is divided into regular hexagonal service sub-areas, and a base station is disposed in each service sub-area, to form a structure similar to a "cellular" shape, because this mobile communication manner is referred to as a cellular mobile communication manner. The cellular network consists of three parts: a mobile station, a base station subsystem (base station subsystem, BSS), and a network subsystem. The mobile station, also referred to as a mobile terminal device, is a mobile device having a wireless communication function, for example, a mobile phone or a tablet computer. The base station subsystem, also referred to as base station equipment, is responsible for sending and receiving radio signals and managing radio resources, and is, for example, a mobile base station and a wireless transceiver device. The network subsystem is responsible for all functions related to end users, such as call connection processing, mobility management, user equipment, and confidentiality, and is, for example, a switch. The cellular network has advantages such as wide distribution, low costs, and a short transmission delay.

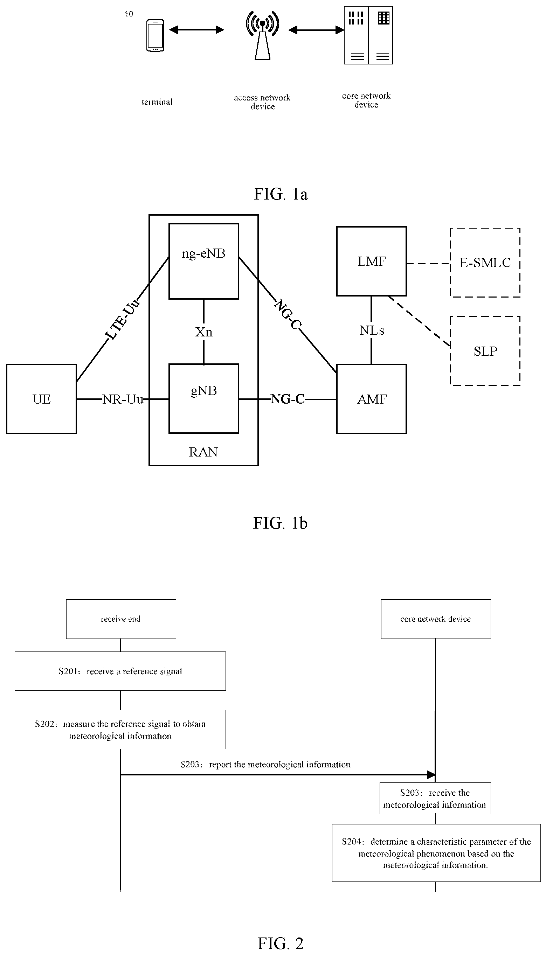

For example, the cellular network is described alternatively as a communication system. The communication system may be a 3rd Generation Partnership Project (Third Generation Partnership Project, 3GPP) communication system, for example, a long term evolution (long term evolution, LTE) system; or may be a fifth generation (fifth generation, 5G) mobile communication system, a new radio (new radio, NR) system, a beyond 5G (behind 5G, B5G) mobile communication system, a sixth generation (sixth generation, 6G) mobile communication system, or a New Radio vehicle-to-everything (vehicle-to-everything, NR V2X) system; and may be further applied to a system with LTE and 5G hybrid networking, a device-to-device (device-to-device, D2D) communication system, a machine-to-machine (machine-to-machine, M2M) communication system, the Internet of Things (Internet of Things, IoT), or another next-generation communication system, or may be a non-3GPP communication system. This is not limited. The following describes the meteorological measurement method provided in embodiments of this application by using a communication system shown in FIG. 1a as an example.

The technical solutions in embodiments of this application may be applied to various communication scenarios, for example, may be applied to one or more of the following communication scenarios: enhanced mobile broadband (enhanced mobile broadband, eMBB), ultra-reliable and low-latency communication (ultra reliable and low latency communication, URLLC), machine type communication (machine type communication, MTC), massive machine-type communication (massive machine type communication, mMTC), D2D, V2X, and IoT.

FIG. 1a is a diagram of a communication system according to an embodiment of this application. As shown in FIG. 1a, the communication system 10 includes a terminal, an access network device, and a core network device. It may be understood that devices in the communication system 10 may directly communicate with each other, or may communicate with each other through forwarding by another device. This is not specifically limited in this embodiment of this application.

It may be understood that FIG. 1a is merely schematic, and does not constitute a limitation on an application scenario of the technical solutions provided in this application. A person skilled in the art should understand that, in a specific implementation process, the communication system 10 may include fewer devices than those shown in FIG. 1a, or the communication system 10 may further include another device. In addition, a quantity of devices in the communication system 10 may be determined according to a specific requirement. This is not limited. The following describes the devices in the system shown in FIG. 1a.

The terminal may be terminal equipment (terminal equipment), user equipment (user equipment, UE), a mobile station (mobile station, MS), a mobile terminal (mobile terminal, MT), or the like, and includes a handheld device, an in-vehicle device, a wearable device, or a compute device having a wireless communication function. Specifically, the terminal may be a mobile phone (mobile phone), a tablet computer, or a computer having a wireless transceiver function, or may be a virtual reality (virtual reality, VR) terminal, an augmented reality (augmented reality, AR) terminal, a wireless terminal in industrial control, a wireless terminal in self driving, a wireless terminal in telemedicine, a wireless terminal in a smart grid, a wireless terminal in a smart city (smart city), a smart home terminal, an in-vehicle terminal, or the like. In embodiments of this application, an apparatus configured to implement a function of the terminal may be a terminal, or may be an apparatus that can support the terminal in implementing the function, for example, a chip system (such as a chip, or a processing system including a plurality of chips) or a modem. The following describes the meteorological measurement method provided in embodiments of this application by using an example in which an apparatus configured to implement a function of a terminal is a terminal.

The access network device is mainly configured to implement functions such as resource scheduling, radio resource management, and wireless access control over the terminal. It is a device in a radio access network (radio access network, RAN), and is used to connect the terminal to a wireless network. The RAN may be connected to a core network (for example, may be an LTE core network, or may be a 5G core network). The access network device may be an evolved NodeB (evolved NodeB, eNB, or eNodeB) in LTE; or a base station in a 5G network or a future evolved public land mobile network (public land mobile network, PLMN), a broadband network gateway (broadband network gateway, BNG), an aggregation switch, or a non-3GPP access device. Alternatively, the access network device in embodiments of this application may be a radio controller in a cloud radio access network (cloud radio access network, CRAN); or a transmission and reception point (transmission and reception point, TRP), a device including a TRP, or the like. This is not specifically limited in embodiments of this application. Optionally, the access network device in embodiments of this application may include base stations in various forms, for example, a macro base station, a micro base station (also referred to as a small cell), a relay station, or an access point. This is not specifically limited in embodiments of this application. In embodiments of this application, an apparatus configured to implement a function of the access network device may be an access network device, or may be an apparatus that can support the access network device in implementing the function, for example, a chip system (such as a chip, or a processing system including a plurality of chips) or a modem (modem). The following describes the meteorological measurement method provided in embodiments of this application by using an example in which an apparatus configured to implement a function of an access network device is an access network device.

Core network devices are classified into control plane (control plane function, CP) devices and user plane (user plane function, UP) devices. The user plane device is mainly responsible for data packet forwarding, quality of service (quality of service, QoS) control, billing information statistics, and the like, and includes a user plane function (user plane function, UPF) network element. The control plane device is mainly responsible for service process interaction, and delivery of a data packet forwarding policy, a QoS control policy, and the like to a user plane, and includes a location management function (location management function, LMF), a network data analysis function (network data analytics function, NWDAF) network element, an access and mobility management function (access and mobility management function, AMF) network element, a session management function (session management function, SMF) network element, a policy control function (policy control function, PCF) network element, an application function (application function, AF) network element, a network exposure function (network exposure function, NEF) network element, an authentication server function (authentication server function, AUSF) network element, a network slice selection function (network slice selection function, NSSF) network element, a network function repository function (network exposure function repository function, NRF) network element, and a unified data management (unified data management, UDM) network element.

For example, when the reference signal in the technical solutions in embodiments of this application is a positioning reference signal, a possible communication system architecture is shown in FIG. 1b. The system architecture includes UE, a next-generation evolved NodeB (next-generation eNodeB, ng-eNB), a next-generation NodeB (next-generation NodeB, gNB), an AMF, and an LMF.

The UE is a device that has a same function as the terminal in FIG. 1a. For detailed descriptions, refer to the description of the terminal in FIG. 1a. Details are not described herein again.

Both the ng-eNB and the gNB are RAN devices. Specifically, the ng-eNB is a base station that supports eLTE and is interconnected with a 5G core network, the gNB is a base station that supports NR, and the ng-eNB communicates with the gNB through an Xn interface. It should be understood that the ng-eNB and the gNB are devices that have a same function as the access network device in FIG. 1a. For detailed functional descriptions, refer to the description of the access network device in FIG. 1a. Details are not described herein again.

The AMF is a core network device network element, and is mainly responsible for registration management, connection management, access management, mobility management, and various functions related to security and access management and authorization, so that the UE can perform data transmission with the LMF.

The LMF is a core network device network element, and is mainly responsible for estimating a location of the UE. Optionally, the LMF network element may be replaced with another functional network element used to estimate the location of the UE, for example, an evolved serving mobile location center (evolved serving mobile location center, E-SMLC) or a secure user plane location-location platform (secure user plane location-location platform, SLP).

NR-Uu is a radio link between the UE and the gNB, and the UE communicates with the gNB through the NR-Uu.

LTE-Uu is a radio link between the UE and the ng-eNB, and the UE communicates with the ng-eNB through the LTE-Uu.

NG-C is a radio link between the gNB and the AMF, and between the ng-eNB and the AMF. The gNB communicates with the AMF through the NG-C, and the ng-eNB communicates with the AMF through the NG-C.

NLs is a radio link between the AMF and the LMF, and the AMF communicates with the LMF through the NLs.

Optionally, the devices (for example, the terminal, the access network device, and the core network device) in FIG. 1a may also be referred to as communication apparatuses, and may be a general-purpose device or a dedicated device. This is not specifically limited in embodiments of this application.

Optionally, a related function of each device in FIG. 1a in this application may be implemented by one device, may be implemented collectively by a plurality of devices, or may be implemented by one or more functional modules in one device. This is not specifically limited in embodiments of this application. It may be understood that the foregoing function may be a network element in a hardware device, or may be a software function running on dedicated hardware, or a combination of hardware and software, or an instantiated virtualized function on a platform (for example, a cloud platform).

With reference to the communication system shown in FIG. 1a, the following describes the meteorological measurement method provided in embodiments of this application. Mutual reference may be made to actions, terms, and the like in the following embodiments. Names of messages exchanged between devices, names of parameters in messages, and the like in the embodiments are merely examples, and other names may be used instead in specific implementation. For example, "corresponding" in the following embodiments may be replaced with "associated".

FIG. 2 is a schematic flowchart of a meteorological measurement method according to an embodiment of this application. As shown in FIG. 2, the method may include the following steps.

S201: A receive end receives a reference signal.

The receive end is an apparatus configured to receive reference signals sent by a transmit end, and may be a terminal or an access network device. The transmit end is an apparatus configured to send reference signals, and may be a terminal or an access network device. There is at least one manner of combination of the receive end and the transmit end. A specific combination manner is determined based on an actual application scenario. This is not limited in this application. For example, the receive end is an access network device, and the transmit end is a terminal; or the receive end is a terminal, and the transmit end is an access network device.

The reference signal is a reference signal transmitted through a radio channel between the transmit end and the receive end. The reference signal may include but is not limited to a reference signal specified in a communication standard. For example, the reference signal may be a channel state information-reference signal (channel state information-reference signal) used to measure a channel characteristic of the radio channel between the transmit end and the receive end. The radio channel may be described alternatively as a radio link, a link, a cellular network transmission link, or the like. The channel characteristic may include but is not limited to a path loss, link attenuation, or the like of the channel. In this application, a new purpose is assigned to the reference signal, and the reference signal is further used for measurement to obtain meteorological information. In addition, naming of the reference signal is not limited in this application. The reference signal may also be referred to as a reference signal or another name without limitation.

In a possible case, the reference signal may be a positioning reference signal in an uplink transmission scenario and/or a downlink transmission scenario. For example, in the uplink transmission scenario, the reference signal may be a sounding reference signal (sounding reference signal, SRS) sent by a base station to a terminal. In the downlink transmission scenario, the reference signal may be a positioning reference signal (positioning reference signal, PRS) sent by the terminal to the base station.

S202: The receive end measures the reference signal to obtain meteorological information.

The meteorological information represents a meteorological characteristic of the radio channel in a transmission process, and/or a channel status of the radio channel in a to-be-measured meteorological phenomenon. The meteorological information may include at least one of the following: distance decoupling path loss information, meteorologically-induced path loss information, a link length, polarization information, direction information, or frequency information.

In this application, that the meteorological information represents the meteorological characteristic of the radio channel in the transmission process may be understood as follows: Information in the radio channel changes due to impact of the to-be-measured meteorological phenomenon in the transmission process. Accordingly, the meteorological characteristic may be represented by using the information that has changed in the radio channel due to the to-be-measured meteorological phenomenon in the transmission process. Therefore, the information that has changed in the radio channel due to the to-be-measured meteorological phenomenon may be referred to as the meteorological characteristic.

The to-be-measured meteorological phenomenon described in this application includes but is not limited to precipitation, snowfall, and the like.

The distance decoupling path loss information indicates a meteorologically-induced attenuation rate. The attenuation rate is a ratio of the meteorologically-induced path loss information to the link length. The meteorologically-induced path loss information indicates meteorologically-induced link attenuation, and the link attenuation means an attenuation value of power of the reference signal from the transmit end to the receive end. The link length indicates a distance between the transmit end and the receive end. The polarization information indicates a vibration direction of a radio wave. The direction information indicates a direction of a propagation path. The frequency information indicates an operating frequency of the reference signal or the transmit end.

Optionally, that the receive end measures the reference signal to obtain the meteorological information may include: The receive end measures the reference signal to obtain received power of the reference signal, and then obtains the meteorological information based on the received power of the reference signal and the transmit power of the reference signal.

In this application, the meteorologically-induced path loss information may be determined by the receive end based on at least one of the following: link attenuation, free-space path loss, transmission path loss caused by water film, or noise. For example, the meteorologically-induced path loss information is equal to the link attenuation minus the following: the free-space path loss, the transmission path loss caused by the water film, and the noise. The free-space path loss means an energy loss caused when the reference signal is propagated in free space. The transmission path loss caused by the water film means an energy loss caused by wrapping of the water film outside an antenna to the reference signal. The noise means an energy loss caused by radio channel noise to the reference signal.

In this application, the link attenuation value is a difference between power at which the receive end receives the reference signal and power at which the transmit end sends the reference signal. The power at which the receive end receives the reference signal may be referred to as received power for short, and the power at which the transmit end sends the reference signal may be referred to as transmit power for short. In a possible manner, the transmit end sends the transmit power to the receive end through signaling such as radio resource control (radio resource control, RRC) signaling, and then the receive end subtracts the received power from the transmit power to determine the link attenuation value. In another possible manner, the power at which the transmit end sends the reference signal is a default value, and the receive end has already stored the default value. Therefore, the receive end subtracts the received power from the default value to determine the link attenuation value. For example, it is assumed that the transmit end is a base station and the receive end is a terminal. The base station sends reference signal transmit power of 30 decibels milliwatts (dBm) to the terminal by using downlink control information (downlink control information, DCI). Then the terminal determines that the power at which the reference signal is received is 20 dBm, and further, the terminal determines that the link attenuation value is 10 dBm.

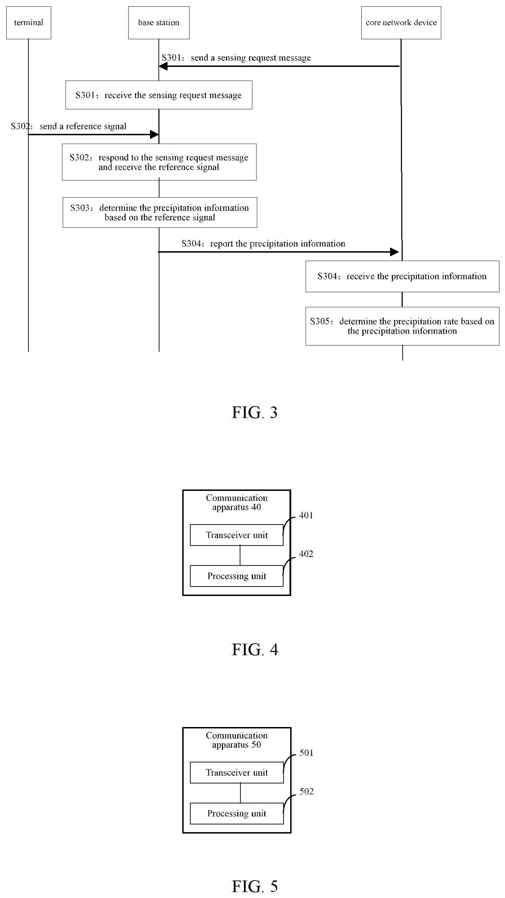

In this application, the link length may be obtained by the receive end by measuring the reference signal, or may be obtained through further computing performed by a core network device based on location information that is of locations of the receive end and the transmit end and that is provided by a functional network element (for example, an LMF). For a specific implementation, refer to an embodiment in FIG. 3.

In this application, the polarization information indicates horizontal polarization, vertical polarization, or another polarization direction of the reference signal. It should be understood that when the horizontal polarization, the vertical polarization, or another polarization direction of the reference signal is agreed upon by the receive end and the transmit end, the polarization information may not be measured. When the receive end is not sure about the horizontal polarization, the vertical polarization, or another polarization direction of the reference signal sent by the transmit end, the receive end needs to measure the polarization information.

In this application, the direction information may be obtained by the receive end by measuring an angle of arrival of the reference signal, or may be obtained through further computing performed by the core network device based on location information that is of locations of the receive end and the transmit end and that is provided by a functional network element (for example, an LMF). For a specific implementation, refer to the embodiment in FIG. 3.

In this application, the frequency information does not need to be measured by the receive end, and a frequency of the reference signal sent by the transmit end or the operating frequency of the transmit end may be understood as a default value agreed on by the receive end and the transmit end.

S203: The receive end reports the meteorological information to the core network device. Accordingly, the core network device receives the meteorological information.

Optionally, that the receive end reports the meteorological information to the core network device includes any one of the following possible design manners.

In a possible design manner, the receive end obtains a sensing request message that is sent by the core network device and that is used to request the receive end to measure and report the meteorological information, and in response to the sensing request message, the receive end performs S201 and S203 to report the meteorological information to the core network device.

In another possible design manner, the receive end actively reports the meteorological information to the core network device. For example, the receive end reports the meteorological information to the core network device at a fixed moment, at a preset time, or within a preset period. For example, when one day is in a 12-hour system, the receive end reports the meteorological information to the core network device at 3:00, 6:00, 9:00, and 12:00.

S204: The core network device determines a characteristic parameter of the meteorological phenomenon based on the meteorological information.

The characteristic parameter of the meteorological phenomenon corresponds to a parameter representing the to-be-measured meteorological phenomenon. For example, when the to-be-measured meteorological phenomenon is precipitation, the characteristic parameter of the meteorological phenomenon may be a precipitation rate. For related descriptions of the meteorological information, refer to S202.

Specifically, that the core network device determines the characteristic parameter of the meteorological phenomenon based on the meteorological information includes: The core network device incorporates specific meteorological information into a method for determining the characteristic parameter of the meteorological phenomenon based on the specific meteorological information, to obtain the characteristic parameter of the meteorological phenomenon. The method for determining the characteristic parameter of the meteorological phenomenon based on the specific meteorological information is an existing method.

For example, it is assumed that the to-be-measured meteorological phenomenon is precipitation, the meteorological information is precipitation information and includes distance decoupling path loss information, and the characteristic parameter of the meteorological phenomenon is a precipitation rate. The core network device incorporates the distance decoupling path loss information into a method based on empirical information to obtain the precipitation rate. The method based on empirical information is an existing method for determining the precipitation rate based on the distance decoupling path loss information and precipitation parameters that correspond to a precipitation type.

Further, the core network device may provide, based on the characteristic parameter of the meteorological phenomenon, a meteorological service corresponding to the characteristic parameter of the meteorological phenomenon.

For example, when the to-be-measured meteorological phenomenon is precipitation, the meteorological information may be precipitation information, and the characteristic parameter of the meteorological phenomenon may be a precipitation rate. A meteorological service corresponding to the precipitation rate may be a meteorological service such as determining surface precipitation, reconstructing a precipitation field, and constructing a high-precision rainfall field for inversion. Specifically, for a manner in which the core network device determines the precipitation rate based on the precipitation information, refer to the step S305 shown in FIG. 3.

Based on the method shown in FIG. 2, the receive end receives the reference signal, then measures the reference signal to obtain the meteorological information that represents the meteorological characteristic of the radio channel in the transmission process and/or the meteorological information of the channel status of the radio channel in the to-be-measured meteorological phenomenon, and further reports the meteorological information to the core network device. Accordingly, the core network device receives the meteorological information, determines the characteristic parameter of the meteorological phenomenon based on the meteorological information, and further provides the meteorological service corresponding to the characteristic parameter of the meteorological phenomenon. In this way, a manner of cellular mobile communication between the transmit end, the receive end, and the core network device is used, to provide a meteorological service in which the distribution of supply is unbalanced, an update delay is short, and the characteristic parameter of the meteorological phenomenon is accurately determined.

A type of the to-be-measured meteorological phenomenon may include but is not limited to precipitation or snowfall. When the type of the to-be-measured meteorological phenomenon is precipitation, the meteorological information may be described alternatively as precipitation information. The following describes the meteorological measurement method shown in FIG. 2 with reference to FIG. 3 by using an example in which the meteorological information is described alternatively as precipitation information, the receive end is a base station, the transmit end is a terminal, the receive end reports the precipitation information to the core network device after obtaining the sensing request message, and a characteristic parameter of the precipitation corresponds to a precipitation rate.

FIG. 3 is a schematic flowchart of a meteorological measurement method according to an embodiment of this application. As shown in FIG. 3, the method may include the following steps.

S301: A core network device sends a sensing request message to a base station. Accordingly, the base station receives the sensing request message.

The sensing request message is used to request the base station to measure and report precipitation information, and includes at least one of the following: a measurement type, a measurement quantity, a measurement period, or a measurement duration.

Specifically, the measurement type indicates that a type of a to-be-measured meteorological phenomenon is precipitation.

The measurement quantity indicates information that needs to be measured and that corresponds to the precipitation, for example, at least one of the following information: distance decoupling path loss information, precipitation-induced path loss information, a link length, polarization information, direction information, and the like.

The measurement period indicates a time interval between two times of measurement, for example, 10 minutes.

The measurement duration indicates total measurement duration, for example, 60 minutes.

S302: A terminal sends a reference signal. Accordingly, the base station responds to the sensing request message and receives the reference signal.

The reference signal is a reference signal transmitted through a radio channel between the terminal and the base station, and includes but is not limited to an electromagnetic wave.

Specifically, the terminal sends the reference signal to the base station, and correspondingly, the base station receives the reference signal sent by the terminal.

It should be understood that a quantity of terminals that send the reference signal to the base station is not limited in this application.

In a possible case, a single terminal sends the reference signal to the base station. Accordingly, the base station receives the reference signal sent by the terminal, and precipitation information subsequently determined by the base station corresponds to precipitation information of a communication link environment between the terminal and the base station.

For example, a terminal 1 sends an electromagnetic wave that serves as the reference signal to the base station. Accordingly, the base station receives the electromagnetic wave sent by the terminal, and precipitation-induced path loss information subsequently determined by the base station corresponds to information about path loss caused by the precipitation to a communication link between the terminal and the base station.

In another possible case, at least one terminal sends the reference signal to the base station. Accordingly, the base station receives the reference signal sent by the at least one terminal, and subsequently the base station separately determines precipitation information of different communication link environments between different terminals and the base station.

For example, the terminal 1 sends an electromagnetic wave 1 that serves as the reference signal to the base station, and a terminal 2 sends an electromagnetic wave 2 that serves as the reference signal to the base station. Accordingly, the base station receives the electromagnetic wave 1 and the electromagnetic wave 2. Precipitation-induced path loss information subsequently determined by the base station includes precipitation-induced path loss information 1 and precipitation-induced path loss information 2. The precipitation-induced path loss information 1 means information about path loss caused by the precipitation to a communication link between the terminal 1 and the base station, and the precipitation-induced path loss information 2 means information about path loss caused by the precipitation to a communication link between the terminal 2 and the base station.

S303: The base station determines the precipitation information based on the reference signal.

The precipitation information represents a precipitation characteristic of the radio channel between the terminal and the base station in a transmission process, and/or a channel status of the radio channel between the terminal and the base station under the precipitation, and includes at least one of the following: distance decoupling path loss information, precipitation-induced path loss information, a link length, polarization information, direction information, or frequency information. Details about the information are as follows.

### (1) Distance decoupling path loss information

The distance decoupling path loss information indicates a precipitation-induced attenuation rate. The attenuation rate is a ratio of the precipitation-induced path loss information to the link length.

Specifically, a method for determining the distance decoupling path loss information includes: dividing the precipitation-induced path loss information by the link length. Therefore, a model of the distance decoupling path loss information may be expressed as follows: ${γ}_{rain} = {A}_{r} \left(t\right) / L$

In the formula (1), *γᵣₐᵢₙ* represents the distance decoupling path loss information, Aᵣ(t) represents the precipitation-induced path loss information, and *L* represents the link length.

It should be understood that a manner of determining the distance decoupling path loss information is not limited in this application. For example, the distance decoupling path loss information may be determined by the base station, or the distance decoupling path loss information may be determined by the core network device.

In a possible manner, that the base station determines the distance decoupling path loss information includes: The base station first determines the precipitation-induced path loss information and the link length, and then determines the distance decoupling path loss information.

For example, the terminal 1 sends an electromagnetic wave that serves as the reference signal to the base station. Accordingly, the base station receives the electromagnetic wave, and determines that the precipitation-induced path loss information is 10 dBm and the link length is 10 m. Therefore, the base station may determine that the distance decoupling path loss information is 1 dBm/m.

In another possible manner, that the core network device determines the distance decoupling path loss information includes: The core network device determines the distance decoupling path loss information after obtaining the precipitation-induced path loss information and the link length.

For example, the precipitation information reported by the base station to the core network device includes the following: The precipitation-induced path loss information is 10 dBm, and the link length is 20 m. The core network device receives the precipitation information, and determines that the distance decoupling path loss information is 0.5 dBm/m.

### (2) Precipitation-induced path loss information

The precipitation-induced path loss information indicates precipitation-induced link attenuation, and the link attenuation means an attenuation value of power of the reference signal from the terminal to the base station.

Specifically, the precipitation-induced path loss information is determined by the base station based on at least one of the following: link attenuation, free-space path loss, transmission path loss caused by water film, or noise. The determining method includes: subtracting the free-space path loss, the transmission path loss caused by the water film, and the noise from the link attenuation. Therefore, a model of the precipitation-induced path loss information may be expressed as follows: ${A}_{r} \left(t\right) = A \left(t\right) - {A}_{WA} \left(t\right) - {A}_{BL} - N \left(t\right)$

In the formula (2), *Aᵣ*(*t*) represents the precipitation-induced path loss information, *A*(*t*) represents the link attenuation and means the attenuation value of the power of the reference signal from the terminal to the base station, *A_{WA}*(*t*) represents the free-space path loss, *A_{BL}* represents the transmission path loss caused by the water film, and *N*(*t*) represents the noise.

In the formula (2), *A_{WA}*(*t*), *A_{BL}*, and *N*(*t*) may be obtained through computing by using an existing model, and *A*(*t*) may be obtained through computing performed by the base station based on the transmit power of the reference signal and the received power of the reference signal.

It should be understood that a manner of determining the link attenuation is not limited in this application. For example, the terminal first sends the transmit power of the reference signal to the base station through signaling, and then the base station determines *A*(*t*); or the transmit power of the reference signal sent by the terminal to the base station is a default value, and the default value is already stored in the base station, and then the base station determines *A*(*t*).

For example, the terminal sends, to the base station through RRC signaling, power (which may be referred to as transmit power for short) at which the reference signal is sent. Then the base station measures power (which may be referred to as received power for short) at which the reference signal is received. Further, the base station subtracts the received power from the transmit power to obtain *A*(*t*).

For example, power (which may be referred to as transmit power for short) at which the terminal sends the reference signal is a default value, and the default value is already stored in the base station. Then the base station measures power (which may be referred to as received power for short) at which the reference signal is received. Further, the base station subtracts the received power from the default value to obtain *A*(*t*).

### (3) Link length

The link length indicates a length of a path between the terminal and the base station.

It should be understood that a transmission scenario in which the link length is determined in this application is applicable to an uplink transmission scenario, and is also applicable to a downlink transmission scenario. In the uplink transmission scenario, the base station measures an SRS sent by the terminal, to further determine a length of a link between the base station and the terminal. In the downlink transmission scenario, the terminal measures a PRS sent by the base station, to further determine the length of the link between the terminal and the base station.

It should be understood that, when the SRS or the PRS serves as the reference signal, the SRS or the PRS is used not only to determine the link length, but also to determine link attenuation.

For example, in the uplink transmission scenario, the reference signal sent by the terminal to the base station is the SRS, and accordingly the base station receives and measures the SRS. A possible measurement method is to search for a peak after a related spectrum is obtained through SRS sequence correlation, where a time sampling point corresponding to the peak is propagation duration of an electromagnetic wave on the link; and then determine the link length based on the measured propagation duration. In addition, the base station may determine the link attenuation by using received power of the SRS.

For example, in the downlink transmission scenario, the reference signal sent by the base station to the terminal is the PRS, and accordingly the terminal receives and measures the PRS. A possible measurement method is to search for a peak after a related spectrum is obtained through PRS sequence correlation, where a time sampling point corresponding to the peak is propagation duration of an electromagnetic wave on the link; and then determine the link length based on the measured propagation duration. In addition, the terminal may determine the link attenuation by using received power of the PRS.

It should be understood that a manner of determining the link length is not limited in this application. For example, when the receive end is the base station and the transmit end is the terminal, the link length may be determined by the base station, or the link length may be determined by the core network device.

For example, when the receive end is the base station, the transmit end is the terminal, and the link length is determined by the base station, the base station performs measurement through SRS sending by the terminal, to further determine the length of the link between the base station and the terminal.

For example, when the receive end is the base station, the transmit end is the terminal, and the link length is determined by the core network device, the core network device obtains location information of the terminal from a location management function (location management function, LMF) network element, to further determine the length of the link between the base station and the terminal based on location information of the base station.

### (4) Polarization information

The polarization information indicates horizontal polarization, vertical polarization, or another polarization direction of the reference signal, and may be used to estimate a shape of a precipitation particle, and may also be used to determine a precipitation rate. Horizontal polarization means that a vibration direction of a radio wave is parallel to the ground. Vertical polarization means that the vibration direction of the radio wave is perpendicular to the ground.

Horizontal polarization of the reference signal means that an antenna of the terminal sends the reference signal by using a horizontal polarization direction, or the base station receives the reference signal by using the horizontal polarization direction, or the antenna of the terminal sends the reference signal and the base station receives the reference signal both by using the horizontal polarization direction. Vertical polarization of the reference signal means that the antenna of the terminal sends the reference signal by using a vertical polarization direction, or the base station receives the reference signal by using the vertical polarization direction, or the antenna of the terminal sends the reference signal and the base station receives the reference signal both by using the vertical polarization direction. Another polarization direction of the reference signal may be a specific direction value, for example, an angle value of offset based on a reference direction, and means that the antenna of the terminal sends the reference signal by using a polarization direction other than horizontal and vertical polarization, or the base station receives the reference signal by using a polarization direction other than horizontal and vertical polarization.

The polarization information is used to estimate the shape of a precipitation particle. When a water droplet falls, the water droplet deforms due to an increase in a falling speed and air resistance. An original approximate circle gradually flattens when the water droplet approaches the ground surface with the increase in the speed. The larger the water droplet particle, the more severe the deformation. Therefore, the reference signal changes during propagation with horizontal polarization and vertical polarization. Generally, the shape of the precipitation particle can be estimated by detecting the difference. For example, the shape of the precipitation particle may be estimated by performing a ratio operation on the horizontal polarization of the reference signal and the vertical polarization of the reference signal. Alternatively, the shape of the precipitation particle may be estimated by performing a ratio operation on the horizontal polarization of the reference signal and the polarization of the reference signal in another direction. It should be understood that in this application, the shape of the precipitation particle may be further estimated by performing a ratio operation on the polarization of the reference signal in different directions, and a polarization direction of the reference signal is not limited.

In a possible case, the core network device needs to obtain the horizontal polarization of the reference signal and the vertical polarization of the reference signal, to further determine the precipitation rate based on the obtained horizontal polarization of the reference signal and the obtained vertical polarization of the reference signal. For details, refer to S305. Details are not described herein again.

### (5) Direction information

The direction information indicates a direction of a propagation path, and may be an included angle to a reference direction. A manner of determining the direction information in this application is similar to a manner of determining the link length in this application.

In a possible manner, the direction information is determined by the base station. For example, the base station obtains an angle of arrival (angle of arrival, AOA) or an angle of departure (angle of departure, AOD) by measuring the reference signal, and determines a relative orientation or angle between the terminal and the base station.

In another possible manner, the direction information is determined by the terminal. For example, the terminal obtains an AOA or an AOD by measuring the reference signal, and determines a relative orientation or angle between the terminal and the base station.

In still another possible manner, the direction information is determined by the core network device. For example, the core network device obtains orientation information of the terminal by using a function network element (for example, an LMF) for obtaining location information of the terminal, and further determines a relative orientation or angle between the terminal and the base station based on location information of the base station.

### (6) Frequency information

The frequency information indicates an operating frequency of the reference signal or the terminal.

It should be understood that, in this application, the frequency information does not need to be obtained through measurement by the base station. It may be simply understood that the operating frequency of the reference signal or the terminal is a default value agreed upon by the terminal and the base station.

It should be understood that a manner of reporting the frequency information to the core network device is not limited in this application. For example, the frequency information may be an absolute radio frequency channel number (absolute radio frequency channel number, ARFCN), a center frequency, or a frequency band range, or indicates a low frequency or a high frequency. Each number in the ARFCN corresponds to an absolute frequency domain location. The center frequency is an intermediate frequency of a frequency band range. The frequency band range is an operating frequency range of the reference signal. The low frequency is a frequency below 6 GHz, for example, represented by a frequency band range FR1 (frequency range 1) defined in 5G NR. The high frequency is a frequency above 6 GHz, for example, represented by a frequency band range FR2 (frequency range 2) defined in 5G NR.

For example, in a possible case, the base station reports specific frequency information to the core network device. For example, the frequency information reported by the base station to the core network device is that the center frequency is 5 GHz. In another possible case, the base station reports, to the core network device, a number corresponding to the ARFCN, and the core network device may further determine specific frequency information by using the number corresponding to the ARFCN.

S304: The base station reports the precipitation information to the core network device. Accordingly, the core network device receives the precipitation information.

The precipitation information represents the channel status of the radio channel between the terminal and the base station under the precipitation. For detailed descriptions of the precipitation information, refer to S303. Details are not described herein again.

S305: The core network device determines the precipitation rate based on the precipitation information.

Specifically, that the core network device determines the precipitation rate based on the precipitation information includes: The core network device determines the distance decoupling path loss information based on the precipitation information, and then determining the precipitation rate based on the distance decoupling path loss information.

It should be understood that a manner in which the core network device determines the distance decoupling path loss information is not limited in this application. For example, the core network device may directly or indirectly determine the distance decoupling path loss information.

In a possible manner, the core network device determines the distance decoupling path loss information directly by using the precipitation information. For example, the precipitation information reported by the base station to the core network device includes the distance decoupling path loss information. Therefore, the core network device may directly determine the distance decoupling path loss information.

In another possible manner, the core network device determines the distance decoupling path loss information indirectly by using the precipitation information. For example, the precipitation information reported by the base station to the core network device includes the precipitation-induced path loss information, and the core network device obtains the link length from the LMF network element. Then the core network device may determine the distance decoupling path loss information by using the formula (1).

It should be understood that a manner in which the core network device determines the precipitation rate based on the distance decoupling path loss information is not limited in this application. For example, the core network device may determine the precipitation rate by using a method based on empirical information, or the core network device may determine the precipitation rate in a manner based on a raindrop spectrum. Specific manners are as follows.

Manner 1: The core network device determines the precipitation rate in a manner based on empirical information.

That the core network device determines the precipitation rate in the manner based on the empirical information includes: The core network device determines the precipitation rate based on the distance decoupling path loss information and precipitation parameters that correspond to a precipitation type, where the precipitation parameters include k and α. In this case, a model for determining the precipitation rate may be expressed as follows: ${γ}_{rain} = k \times {R}^{α}$ where *γᵣₐᵢₙ* represents the distance decoupling path loss information, *R* represents the precipitation rate, and k and α represent the precipitation parameters.

For example, the precipitation type is stratus cloud precipitation, and precipitation parameters corresponding to the stratus cloud precipitation are k = 200 and α = 1.6. The core network device determines that the distance decoupling path loss information is 1 dBm/m, and the precipitation rate *R* may be obtained by using the formula (3).

Specifically, different precipitation types correspond to different precipitation parameters. For example, Table 1 provides precipitation parameters corresponding to several common precipitation types.

**Table 1**

| Precipitation type | k | α |
|---|---|---|
| Thunderstorm | 830 | 1.5 |
| Drizzle | 190 | 1.5 |
| Stratiform precipitation | 227 | 1.53 |
| Convective precipitation | 161 | 1.55 |

Manner 2: The core network device determines the precipitation rate in a manner based on a raindrop spectrum.

That the core network device determines the precipitation rate in the manner based on the raindrop spectrum includes: The core network device first determines a raindrop spectrum function by using information such as a raindrop diameter, frequency information, a temperature, an inversion function, and polarization information; and further determines the precipitation rate by using a raindrop velocity, the raindrop diameter, and the raindrop spectrum function.

Specifically, the core network device determines the raindrop spectrum function by using the information such as the raindrop diameter, the frequency information, the temperature, the inversion function, and the polarization information as follows:
There is a correspondence between the raindrop spectrum function *N*(*D*) and the distance decoupling path loss information, and a specific corresponding model may be expressed as follows: ${γ}_{rain} = 4.343 \times {\int }_{0}^{∞} C \left(D, f, T\right) ⋅ N \left(D\right) dD$

In the formula (4), *C*(*D, f, T*) represents the inversion function, *D* represents the raindrop diameter, *N*(*D*) represents the raindrop spectrum function, *f* represents the operating frequency of the signal, and *T* represents the temperature.

A model for determining the raindrop spectrum function may be further expressed as follows: $N \left(D\right) = {N}_{D} {D}^{μ} exp \left(-ΛD\right) \left(0<D<{D}_{max}\right)$

In the formula (5), *D* represents the raindrop diameter, and a centralized parameter *N_{D},* a shape parameter *µ*, and a slope *A* are unknown parameters.

Further, when the centralized parameter *N_{D},* the shape parameter *µ*, and the slope *A* in the formula (5) are determinate, the precipitation rate may be determined by using the raindrop velocity, the raindrop diameter, and the raindrop spectrum function. In this case, a model for determining the precipitation rate may be expressed as follows: $R = \frac{π}{6} {\int }_{0}^{∞} {D}^{3} ⋅ N \left(D\right) ⋅ V \left(D\right) dD$

In the formula (6), *R* represents the precipitation rate, *D* represents the raindrop diameter, *N*(*D*) is the raindrop spectrum function, and *V*(*D*) represents the raindrop velocity.

A value of the raindrop velocity V(D) is related to the raindrop diameter, and a model for determining the raindrop velocity based on the raindrop diameter may be expressed as follows: $V \left(D\right) = \left\{\begin{matrix}0 & D \leq 0.03 mm \\ 4.323 \left(D-0.03\right) & 0.03 mm < D \leq 0.06 mm \\ 9.65 - {e}^{- 0.6 D} & D > 0.06 mm\end{matrix}\right.$

For example, when measuring the precipitation information, the base station uses frequency information *f*₁, frequency information *f*₂, horizontal polarization information, and vertical polarization information for a same path, and combines *f*₁, *f*₂, the horizontal polarization information, and the vertical polarization information respectively into the formula (4), to obtain at least a formula (8). Then the centralized parameter *N_{D},* the shape parameter *µ*, and the slope *A* may be determined by solving the formula (8). Finally, the precipitation rate *R* is obtained by incorporating the determined centralized parameter *N_{D}*, shape parameter *µ*, and slope A into the formula (6). $\left\{\begin{matrix}{γ}_{rain , 1} = 4.343 \times {\int }_{0}^{∞} C \left(D, {f}_{1}, T\right) ⋅ N \left(D\right) dD \\ {γ}_{rain , 2 , h} = 4.343 \times {\int }_{0}^{∞} C \left(D, {f}_{2}, T\right) ⋅ N \left(D\right) dD \\ {γ}_{rain , 3 , v} = 4.343 \times {\int }_{0}^{∞} C \left(D, {f}_{2}, T\right) ⋅ N \left(D\right) dD\end{matrix}\right.$

In the formula (8), *D* represents the raindrop diameter, *N*(*D*) represents the raindrop spectrum function, *f*₁ represents one type of frequency information, *f*₂ represents another type of frequency information, *T* represents the temperature, *C*(*D, f, T*) is the inversion function, and *γ*_{*rain*,1} represents the corresponding distance decoupling path loss information when the operating frequency of the reference signal measured by the base station is *f*₁ and no polarization information exists; *γ*_{*rain*,2,*h*} represents the corresponding distance decoupling path loss information when the operating frequency of the reference signal measured by the base station is *f*₂ and the horizontal polarization information exists; and *γ*_{*rain*,3,*v*} represents the corresponding distance decoupling path loss information when the operating frequency of the reference signal measured by the base station is *f*₂ and the vertical polarization information exists.

Based on the method shown in FIG. 3, the base station receives the sensing request message that is sent by the core network device and that is used to request the base station to report the precipitation information. Then the base station receives, based on the sensing request message, the reference signal sent by the terminal. Further, the base station determines the precipitation information based on the reference signal. Finally, the base station reports the precipitation information to the core network device, so that the core network device can determine the precipitation rate based on the received precipitation information, to further provide a meteorological service in which the precipitation rate is accurately determined. In addition, the meteorological service is implemented in which the distribution of supply is balanced and an update delay is short by utilizing, to a maximum extent, the characteristics of wide distribution and short information transmission delays of the terminal, the base station, and the core network device.

The foregoing mainly describes the solutions provided in embodiments of this application from a perspective of interaction between the devices. It may be understood that, to implement the foregoing functions, the devices such as the transmit end (for example, the terminal), the receive end (for example, the access network device), and the core network device include a corresponding hardware structure and/or software module for performing the functions. A person of ordinary skill in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, division of functional modules may be performed on the transmit end, the receive end, the core network device, and the like based on the foregoing method examples. For example, division of various functional modules may be performed based on corresponding functions, or two or more functions may be integrated into one processing module. The integrated module may be implemented in a form of hardware, or may be implemented in a form of a software functional module. It should be noted that in embodiments of this application, division into the modules is an example, and is merely logical function division. In actual implementation, another division manner may be used.

FIG. 4 is a diagram of a structure of a communication apparatus 40. The communication apparatus 40 may be configured to perform functions of the receive end in the foregoing embodiments. In a possible implementation, the communication apparatus 40 shown in FIG. 4 includes a transceiver unit 401 and a processing unit 402.

The transceiver unit 401 is configured to receive a reference signal transmitted through a radio channel, and is further configured to report meteorological information to a core network device, where the meteorological information represents a meteorological characteristic of the radio channel in a transmission process, and/or a channel status of the radio channel in a to-be-measured meteorological phenomenon. For example, the transceiver unit 401 may be configured to support the communication apparatus 40 in performing S302 and S304.

The processing unit 402 is configured to measure the reference signal to obtain the meteorological information. For example, the processing unit 402 may support the communication apparatus 40 in performing S303.

For related descriptions of the reference signal, the to-be-measured meteorological phenomenon, and the meteorological information, refer to descriptions in the foregoing method embodiments.

Specifically, all related content of each step in the method embodiment shown in FIG. 3 may be referenced to a function description of a corresponding functional module, and details are not described herein again. The communication apparatus 40 is configured to perform a function of the base station in the meteorological measurement method shown in FIG. 3, and therefore can achieve a same effect as the meteorological measurement method.

In another possible implementation, the communication apparatus 40 shown in FIG. 4 includes a processing module and a communication module. The processing module is configured to control and manage actions of the communication apparatus 40. For example, the processing module may integrate a function of the processing unit 402, and may be configured to support the communication apparatus 40 in performing S303 and another process of the technology described in this specification. The communication module may integrate a function of the transceiver unit 401, and may be configured to support the communication apparatus 40 in performing S302 and S304 and communicating with another network entity, for example, communicating with a functional module or a network entity shown in FIG. 3. The communication apparatus 40 may further include a storage module configured to store program code and data of the communication apparatus 40.

FIG. 5 is a diagram of a structure of a communication apparatus 50. The communication apparatus 50 may be configured to perform functions of the core network device in the foregoing embodiments. In a possible implementation, the communication apparatus 50 shown in FIG. 5 includes a transceiver unit 501 and a processing unit 502.

The transceiver unit 501 is configured to receive meteorological information reported by a receive end, where the meteorological information represents a meteorological characteristic of a radio channel in a transmission process, and/or a channel status of the radio channel in a to-be-measured meteorological phenomenon. For example, the transceiver unit 501 may be configured to support the communication apparatus 50 in performing S304.

The processing unit 502 is configured to determine a characteristic parameter of the meteorological phenomenon based on the meteorological information. For example, the processing unit 502 may support the communication apparatus 50 in performing S305.

For related descriptions of the meteorological information, the to-be-measured meteorological phenomenon, and the characteristic parameter of the meteorological phenomenon, refer to descriptions in the foregoing method embodiments.

Specifically, all related content of each step in the method embodiment shown in FIG. 3 may be referenced to a function description of a corresponding functional module, and details are not described herein again. The communication apparatus 50 is configured to perform a function of the core network device in the meteorological measurement method shown in FIG. 3, and therefore can achieve a same effect as the meteorological measurement method.

In another possible implementation, the communication apparatus 50 shown in FIG. 5 includes a processing module and a communication module. The processing module is configured to control and manage actions of the communication apparatus 50. For example, the processing module may integrate a function of the processing unit 502, and may be configured to support the communication apparatus 50 in performing S305 and another process of the technology described in this specification. The communication module may integrate a function of the transceiver unit 501, and may be configured to support the communication apparatus 50 in performing S304 and communicating with another network entity, for example, communicating with a functional module or a network entity shown in FIG. 3. The communication apparatus 50 may further include a storage module configured to store program code and data of the communication apparatus 50.

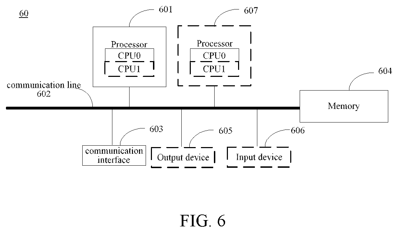

The processing module as mentioned previously may be a processor or a controller. The processor may implement or execute various example logical blocks, modules, and circuits described with reference to content disclosed in this application. Alternatively, the processor may be a combination of processors implementing a computing function, for example, a combination of one or more microprocessors, or a combination of the DSP and a microprocessor. The communication module may be a transceiver circuit, a communication interface, or the like. The storage module may be a memory. When the processing module is a processor, the communication module is a communication interface, and the storage module is a memory, the communication apparatus 40 and the communication apparatus 50 in embodiments of this application may be a communication apparatus 60 shown in FIG. 6. For example, the receive end and the core network device mentioned previously may employ a composition structure shown in FIG. 6 or include components shown in FIG. 6. FIG. 6 is a diagram of composition of a communication apparatus 60 according to an embodiment of this application. As shown in FIG. 6, the communication apparatus 60 may include a processor 601, a communication line 602, and a communication interface 603.

Further, the communication apparatus 60 may further include a memory 604. The processor 601, the memory 604, and the communication interface 603 may be connected to each other through the communication line 602.

The processor 601 may be a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 601 may be another communication apparatus having a processing function, for example, a circuit, a device, or a software module.

The communication line 602 is configured to transfer information between the components included in the communication apparatus 60.

The communication interface 603 is configured to communicate with another device or another communication network. Another communication network may be Ethernet, a radio access network (radio access network, RAN), a wireless local area network (wireless local area network, WLAN), or the like. The communication interface 603 may be a radio frequency module, a transceiver, or any communication apparatus that can implement communication. In embodiments of this application, an example in which the communication interface 603 is a radio frequency module is used for description. The radio frequency module may include an antenna, a radio frequency circuit, and the like. The radio frequency circuit may include a radio frequency integrated chip, a power amplifier, and the like.

The memory 604 is configured to store instructions. The instructions may be a computer program.

The memory 604 may be a read-only memory (read-only memory, ROM) or another type of a static storage device that may store static information and/or instructions, or may be a random access memory (random access memory, RAM) or another type of a dynamic storage device that may store information and/or instructions, or may be an electrically erasable programmable read-only memory (electrically erasable programmable read-only memory, EEPROM), a compact disc read-only memory (compact disc read-only memory, CD-ROM) or another compact disc storage, an optical disc storage, or a magnetic disk storage medium or another magnetic storage device. The optical disc storage includes a compact disc, a laser disc, an optical disc, a digital versatile disc, a Blu-ray disc, and the like.

It should be noted that, the memory 604 may exist independently of the processor 601, or may be integrated with the processor 601. The memory 604 may be configured to store instructions, program code, some data, or the like. The memory 604 may be located in the communication apparatus 60, or may be located outside the communication apparatus 60. This is not limited. The processor 601 is configured to execute the instructions stored in the memory 604, to implement the communication method provided in the following embodiments of this application.

In an example, the processor 601 may include one or more CPUs, for example, a CPU 0 and a CPU 1 in FIG. 6.

In an optional implementation, the communication apparatus 60 includes a plurality of processors, for example, may further include a processor 607 in addition to the processor 601 in FIG. 6.

In an optional implementation, the communication apparatus 60 further includes an output device 605 and an input device 606. The input device 606 is a keyboard, a mouse, a microphone, a joystick, or the like, and the output device 605 is a device such as a display or a speaker (speaker).

It should be noted that the communication apparatus 60 may be a desktop computer, a portable computer, a network server, a mobile phone, a tablet computer, a wireless terminal, an embedded device, a chip system, or a device having a structure similar to that in FIG. 6. In addition, the composition and structure shown in FIG. 6 does not constitute a limitation on the communication apparatus. In addition to the components shown in FIG. 6, the communication apparatus may include more or fewer components than those shown in the figure, or combine some components, or have different component arrangements.

In this embodiment of this application, the chip system may include a chip, or may include a chip and another discrete component.

An embodiment of this application further provides a computer-readable storage medium. All or some of procedures in the foregoing method embodiments may be implemented by a computer program instructing related hardware. The program may be stored in the foregoing computer-readable storage medium. When the program is executed, the procedures in the foregoing method embodiments may be performed. The computer-readable storage medium may be a terminal in any one of the foregoing embodiments, for example, an internal storage unit including a data transmit end and/or a data receive end, such as a hard disk or a memory of the terminal. Alternatively, the computer-readable storage medium may be an external storage device of the terminal, for example, a plug-in hard disk, a smart media card (smart media card, SMC), a secure digital (secure digital, SD) card, a flash card (flash card), or the like that are configured on the terminal. Further, the computer-readable storage medium may further include both an internal storage unit and an external storage device of the foregoing terminal. The computer-readable storage medium is configured to store the computer program and other programs and data required by the foregoing terminal. The computer-readable storage medium may be further configured to temporarily store data that has been output or is to be output.

It should be understood that collection, storage, use, processing, transmission, provision, disclosure, and the like of personal user information in the technical solutions of this application all comply with related laws and regulations, and do not violate public order and good morals. For example, in the technical solutions in this application, the personal user information is processed with user authorization, as stated herein and not reiterated further.

It should be noted that, in the specification, claims, and accompanying drawings of this application, the terms "first", "second", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, "a and b", "a and c", "b and c", or "a, b, and c", where a, b, and c may be singular or plural.

It should be understood that in embodiments of this application, "B corresponding to A" indicates that B is associated with A. For example, B may be determined based on A. It should be further understood that determining B based on A does not mean that B is determined based only on A. B may alternatively be determined based on A and/or other information. In embodiments of this application, "connection" means various connection manners such as a direct connection or an indirect connection, for implementing communication between devices. This is not limited in embodiments of this application.

Unless otherwise specified, "transmission" (transmit/transmission) in embodiments of this application means bidirectional transmission, and includes a sending action and/or a receiving action. Specifically, "transmission" in embodiments of this application includes data sending, data receiving, or data sending and receiving. In other words, data transmission herein includes uplink and/or downlink data transmission. Data may include a channel and/or a signal. The uplink data transmission is uplink channel transmission and/or uplink signal transmission, and the downlink data transmission is downlink channel transmission and/or downlink signal transmission. In embodiments of this application, a "network" and a "system" express a same concept, and a communication system is a communication network.

Based on the foregoing descriptions of the implementations, a person skilled in the art may clearly understand that for the purpose of convenient and brief descriptions, division of the foregoing functional modules is merely used as an example for descriptions. During actual application, the foregoing functions may be allocated to different functional modules for implementation according to a requirement, that is, an inner structure of an apparatus is divided into different functional modules, to implement all or some of the functions described above.

In the several embodiments provided in this application, it should be understood that the disclosed communication apparatus and the method may be implemented in other manners. For example, the described communication apparatus embodiments are merely examples. For example, division of the modules or units is merely logical function division. During actual implementation, another division manner may be used. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented electronically, mechanically, or in other forms.

The units described as separate parts may be or may not be physically separate, and parts displayed as units may be one or more physical units, may be located in one place, or may be distributed in different places. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for enabling a device such as a single-chip microcomputer or a chip or for enabling a processor (processor) to perform all or some of the steps of the methods in embodiments of this application. The storage medium includes any medium that can store program code, such as a USB flash drive, a removable hard disk, a ROM, a RAM, a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A meteorological measurement method, comprising:
receiving a reference signal transmitted through a radio channel;
measuring the reference signal to obtain meteorological information, wherein the meteorological information represents a meteorological characteristic of the radio channel in a transmission process, and/or a channel status of the radio channel in a to-be-measured meteorological phenomenon; and
reporting the meteorological information to a core network device.

2. The method according to claim 1, wherein the method further comprises:
receiving a sensing request message, wherein the sensing request message is used to request to measure and report the meteorological information; and
receiving the reference signal transmitted through the radio channel comprises: receiving, based on the sensing request message, the reference signal transmitted through the radio channel.

3. The method according to claim 2, wherein the sensing request message comprises at least one of the following:
a measurement type, a measurement quantity, a measurement period, or a measurement duration;
the measurement type indicates a type of the to-be-measured meteorological phenomenon; and
the measurement quantity indicates information that needs to be measured and that corresponds to the to-be-measured meteorological phenomenon.

4. The method according to any one of claims 1 to 3, wherein the meteorological information comprises at least one of the following:
distance decoupling path loss information, meteorologically-induced path loss information, a link length, polarization information, direction information, or frequency information.

5. The method according to claim 4, wherein the meteorologically-induced path loss information is determined by a receive end based on at least one of the following:
link attenuation, free-space path loss, transmission path loss caused by water film, or noise.

6. A meteorological measurement method, comprising:
receiving meteorological information reported by a receive end, wherein the meteorological information represents a meteorological characteristic of a radio channel in a transmission process, and/or a channel status of the radio channel in a to-be-measured meteorological phenomenon; and
determining a characteristic parameter of the meteorological phenomenon based on the meteorological information.

7. The method according to claim 6, wherein the method further comprises:
sending a sensing request message, wherein the sensing request message is used to request to measure and report the meteorological information.

8. The method according to claim 7, wherein the sensing request message comprises at least one of the following:
a measurement type, a measurement quantity, a measurement period, or a measurement duration;
the measurement type indicates a type of the to-be-measured meteorological phenomenon; and
the measurement quantity indicates information that needs to be measured and that corresponds to the to-be-measured meteorological phenomenon.

9. The method according to any one of claims 6 to 8, wherein the meteorological information comprises at least one of the following:
distance decoupling path loss information, meteorologically-induced path loss information, a link length, polarization information, direction information, or frequency information.

10. The method according to claim 9, wherein the meteorologically-induced path loss information is determined by the receive end based on at least one of the following: link attenuation, free-space path loss, transmission path loss caused by water film, or noise.

11. The method according to any one of claims 1 to 10, wherein
a transmit end is a terminal device, and the receive end is an access network device; or
a transmit end is an access network device, and the receive end is a terminal device.

12. A communication apparatus, wherein the communication apparatus is used at a receive end, and the communication apparatus comprises:
a transceiver unit, configured to receive a reference signal transmitted through a radio channel; and
a processing unit, configured to measure the reference signal to obtain meteorological information, wherein the meteorological information represents a meteorological characteristic of the radio channel in a transmission process, and/or a channel status of the radio channel in a to-be-measured meteorological phenomenon; and
the transceiver unit is further configured to report the meteorological information to a core network device.

13. A communication apparatus, wherein the communication apparatus comprises a processor and a communication interface, and the processor and the communication interface are configured to support the communication apparatus in performing the meteorological measurement method according to any one of claims 1 to 5.

14. A communication apparatus, wherein the communication apparatus is used in a core network device, and the communication apparatus comprises:
a transceiver unit, configured to receive meteorological information reported by a receive end, wherein the meteorological information represents a meteorological characteristic of a radio channel in a transmission process, and/or a channel status of the radio channel in a to-be-measured meteorological phenomenon; and
a processing unit, configured to determine a characteristic parameter of the meteorological phenomenon based on the meteorological information.

15. A communication apparatus, wherein the communication apparatus comprises a processor and a communication interface, and the processor and the communication interface are configured to support the communication apparatus in performing the meteorological measurement method according to any one of claims 6 to 11.

16. A communication system, wherein the communication system comprises a transmit end and the communication apparatus according to claim 12or 13, or the communication system comprises a transmit end and the communication apparatus according to claim 14or 15.

17. A computer-readable storage medium, wherein the computer-readable storage medium stores computer instructions; and when the computer instructions are run on a computer, the computer is enabled to perform the method according to any one of claims 1 to 5, or the computer is enabled to perform the method according to any one of claims 6 to 11.

18. A computer program product, wherein the computer program product comprises computer instructions; and when the computer instructions are run on a computer, the computer is enabled to perform the method according to any one of claims 1 to 5, or the computer is enabled to perform the method according to any one of claims 6 to 11.
